Europäisches Patentamt

**European Patent Office**

**Office européen des brevets**

(19)

(11) Publication number: **0 011 558**

**A1**

(12)

# EUROPEAN PATENT APPLICATION

(21) Application number: **79400846.6**

(22) Date of filing: **12.11.79**

(51) Int. Cl.³: **F 16 L 47/00**
**E 03 F 3/04**

(30) Priority: **13.11.78 US 960336**

(43) Date of publication of application:
**28.05.80 Bulletin 80/11**

(84) Designated Contracting States:
**AT BE CH DE FR GB IT LU NL SE**

(71) Applicant: **CALGON CORPORATION**

**Robinson Township Pennsylvania 15205(US)**

(72) Inventor: **Joint, Patrick L.**
**5338 Blossom Road**
**Pittsburgh, Pennsylvania 15236(US)**

(72) Inventor: **Mooney Jr. Charles F.**
**106 Stonecrest Drive**
**Marietta, Ohio 45750(US)**

(74) Representative: **Martin, Jean-Jacques et al,**
**Cabinet REGIMBEAU 26, Avenue Kléber**
**F-75116 Paris(FR)**

(54) **Thermoplastic pipe joining method and modular components for use therein.**

(57) A thermoplastic pipe joining method and modular components for use therein providing a system of standardized parts affording flexibility, ease of assembly, and low cost replacement and repair, especially for use in assembling submersible underdrain systems to be installed in an activated carbon adsorber for the purpose of dispensing and/or collecting industrial wastewater or other liquid material to be treated by said activated carbon, comprising thermoplastic pipe pieces having on at least one end thereof a thermoplastic coupling ring portion (43,44) comprising a flange having one face flush with the pipe opening and the opposite face having a tapered cross-section and a thermoplastic, ring-shaped locking cap (47) in two equal halves (45,46) having an inside diameter at least as great as the outside diameter of two pipe pieces to be joined, and having a groove opening onto its aperture, said groove being of a size and shape to accommodate the two coupling ring portions of the pipe pieces when they are joined, said locking cap being provided with means for securing the two halves thereof together.

Fig 8

Croydon Printing Company Ltd.

-1-                                    C-1218

TITLE OF THE INVENTION

THERMOPLASTIC PIPE JOINING METHOD FOR MODULAR SYSTEM

BACKGROUND OF THE INVENTION:

Field of the Invention:

The present invention is concerned with a thermoplastic pipe joining method and with modular components for use therein.

Particularly, the present invention is concerned with a thermoplastic pipe joining method and modular components especially for use in assembling submersible underdrain systems to be installed in an activated carbon adsorber for the purpose of introducing and/or collecting industrial wastewater or other liquid material to be treated by said activated carbon.

Brief Description of the Prior Art:

The Victaulic Company of America offers a grooved piping method for use with standard steel pipe, cast or ductile iron, lightwall steel, stainless steel and PVC. The method utilizes malleable or ductile iron housing segments and a resilient elastomeric gasket. However, the method also requires that pipe ends being joined have a groove configuration, a requirement considered unacceptable with the thermoplastic pipe to which the present invention is applicable.

Other pipe joining methods employed heretofore, especially those employed with thermoplastic pipe, have typically employed a system of flanges and gaskets, or have utilized threaded couplings and friction fittings. Both such systems require special pipe pieces and can only be assembled and disassembled with some difficulty, whereas the method of the present invention can be adapted to use standard thermoplastic pipe pieces, and permits rapid and troublefree assembly and disassembly.

SUMMARY OF THE INVENTION:

The thermoplastic pipe joining method of the present invention utilizes a system of standardized parts and affords flexibility, ease of assembly, and low cost replacement and repair. Individual components of the system may be easily replaced when they fail without the necessity of replacing major segments of the system, since all pipe joints made by the method of the present invention are not permanent, but rather, may be readily disassembled. Thus, there is no need to break permanent joints, with the typical injury to major parts of the system which this might entail, or to replace such major segments of the system due to the difficulty of disjoining various component parts of the system.

The method of the present invention is one which also provides quick coupling of pipe pieces and equally rapid disassembly. In a preferred embodiment of the present invention, straight sections of pipe are cut to the desired length and then made into a modular part of the system by fusing a coupling ring onto the end thereof. This can be accomplished easily and quickly in the field by making electrical resistance fusion joints. Thus, in accordance with the method of the present invention it is possible to assemble any one of a large number of different piping systems, both conveniently and quickly, from a small number of modular components. This means, in turn, great savings in warehousing space and assembly time in the field.

The thermoplastic pipe joining method of the present invention utilizes a system of standardized parts, i.e., modular components. These are comprised first, basically, of pipe pieces having configurations typical of thermoplastic pipe pieces usually available. The most frequently employed configurations are Tees, 1/4 Bends, and straight sections of various lengths. However, other typical configurations are also available and are just as easily employed to make the modular components of the present invention. For example, there may be employed Double Reducing Tees; Short Sweep and Long Sweep 1/4 Bends; 1/8 and 1/16 Bends; 3-Way Ells; 45° Wyes; Reducing, Double, and Double Reducing 45° Wyes; Long Turn Tee Wyes; and so forth.

Thermoplastic pipe pieces normally available, except for straight pieces, usually have a socket or collar at all open ends of the piece, which are intended to receive and fit around the end of a straight piece to which it is normally to be joined. Where such conventional thermoplastic pipe pieces are utilized for the modular components of the present invention, however, it is necessary to join a thermoplastic sleeve portion, made from a short section of straight pipe, to the socket or collar end of the conventional piece, since the coupling ring portion of the modular component of the present invention can be bonded only to the end of a pipe piece which does not have a socket or collar configuration. The use of a sleeve portion to modify conventional thermoplastic pipe pieces is desirable since conventional pipe pieces are readily available and relatively inexpensive. When the sleeve portion is used to modify conventional pipe pieces, it is simply joined to the conventional piece in the same manner as a straight pipe section of greater length is usually joined, i.e., by fitting into the socket or collar portion of the conventional piece, followed by heat fusion to permanently bond the thermoplastic sleeve portion to the thermoplastic conventional piece. It would also be possible to accomplish the joining by means of a bonding adhesive, but this is considered less desirable since it would be more time consuming and expensive, and would not result in as reliable a bond.

Of course, it is not necessary to utilize conventional thermoplastic pipe pieces in making the modular components of the present invention. It is possible to mold or otherwise manufacture thermoplastic pipe pieces which do not have a socket or collar configuration at their open ends. In such a case, however, it would be preferred to also have the coupling ring portion of the modular component molded into the pipe piece as an integral part of its overall configuration.

The size of the pipe pieces forming the basis for the modular components of the present invention, in terms of inside diameters, is not critical. Typically, the inside diameters will range from 1 to 6 inches, while larger pieces may be employed.

The thermoplastic pipe pieces which form a part of the modular components of the present invention have, as an essential part thereof, a thermoplastic coupling ring portion. This coupling ring portion of the pipe piece comprises a flange having one face flush with the pipe opening and the opposite face having a tapered cross-section. When two pipe pieces are joined together, the face of each coupling ring on each pipe piece which is flush with the pipe opening will be brought into contact with the same face of the opposing coupling ring. In this way the openings of the pipe pieces are contiguous and form a continuous conduit. When the coupling rings are thus brought together, the faces opposite to those which have been brought into contact, which have tapered cross-section, will now fit into the groove in the thermoplastic locking cap part of the modular component of the present invention, as will be described in more detail below.

As already suggested above, the thermoplastic coupling ring may be formed as an integral part of the basic pipe piece. However, this would, of course, require special molding or other manufacture for the pipe pieces, thus preventing use of relatively inexpensive conventional thermoplastic pipe pieces, which are also usually readily available. Thus, it is preferred to bond the coupling ring as a separate piece onto the pipe piece. This preferred manner of making this part of the modular component of the present invention also has another important advantage. When whole piping systems are being prepared using modular components of the present invention, straight pieces of varying lengths will be employed, and these straight pieces must all be provided with coupling rings. However, the precise length of these straight pieces will often be unpredictable, and besides, it would be impractical to stock an inventory of many straight pieces of various lengths. Accordingly, in a preferred embodiment of the present invention, conventional straight pipe pieces are cut to the required length in the field, i.e., where a whole piping system is being prepared, and the coupling rings are then bonded onto the ends of these straight pipe pieces. The other conventional pipe pieces which are used to prepare the whole piping system are, by contrast, already provided with coupling rings, and have been previously stocked as an available inventory from which they are simply selected once the design of the whole piping system has been established.

-6-                              C-1218

Where the coupling rings are bonded onto the ends of the cut straight pipe pieces, and occassionally onto the ends of other conventional pipe pieces, for example where repairs are being made, the bonding may be carried out by thermal fusion using standard techniques and equipment, or may possibly be carried out using a bonding adhesive. It is preferred, however, to employ an electrical resistance fusion bonding process available from R. & G. Sloane Manufacturing Company, Inc., Woodland Hills, California 91364, and described in U.S. Patents Nos. 3,094,452; 3,378,672; 3,465,126; and 3,506,519. This electrical resistance fusion bonding process utilizes a welding sleeve or jacket consisting of a wire coil connected by or embedded in a thin layer of a thermoplastic synthetic resin. When an electric current is applied to the wire coil, the thin layer of resin and the synthetic resin parts of the shaped articles to be connected, which are adjacent the welding sleeve, will be melted to form a joint. With the method of the present invention, the welding sleeve is placed between the outer surface of the thermoplastic pipe piece end, and the inner circumferential surface of the thermoplastic coupling ring, which is made of a size to just fit over the welding sleeve and the outer surface of the pipe piece end. When an electric current is passed through the wire coil of the welding sleeve, the thermoplastic synthetic resin of the pipe piece and coupling ring adjacent the welding sleeve, and of the welding sleeve itself, will be fused together to form a strong, monolithic bond.

The remaining part of the modular components of the present invention is the thermoplastic, ring-shaped locking cap in two equal halves. The ring-shaped locking cap has an aperture or opening through its center, the diameter of which is at least as great as the outside diameter of any two pipe pieces which are being joined. Opening onto this aperture or opening in the ring-shaped locking cap is a groove, which runs through the entire circumference of the aperture or opening. The groove is of a size and shape to accommodate the two coupling ring portions of the pipe pieces when they are joined. As already mentioned above, when the coupling rings are thus brought together, the faces opposite to those which have been brought into contact have tapered cross-sections which fit into the groove in the locking cap. As a result of the tapered cross-sections, the two halves of the locking cap, when they are brought together and secured, actively press the two coupling rings together at the faces where they are joined together, which are flush with the pipe piece openings. In this way, a tight and secure joint is established.

The two equal halves of the locking cap may be secured together by a number of different means, for example a snap joint coupling or a constriction band. However, for maximum securing power and ease of assembly, it is preferred to employ two bolts which pass through holes on either side of one half of the locking cap, and are received and threadingly engaged by adjacent holes in the other, opposing half of the locking cap.

The thermoplastic compositions from which the modular components of the present invention are made, are preferably thermoplastic synthetic resins with relatively low melting or softening points. The thermoplastic compositions must also satisfy a number of different requirements, depending upon the environment in which the whole piping system is to be used. For example, the thermoplastic composition may be required to possess resistance to corrosion, acid, base and other chemical attack, and abrasion, and be able to withstand certain levels of elevated pressure. It has been found that polyolefin resins satisfy most of these requirements, and polypropylene has been found especially suitable. While the bolts used to secure the two halves of the locking cap in a preferred embodiment of the present invention may also be made of polypropylene or other polyolefin resin, it is preferred to employ materials with greater strength characteristics, for example, Tefcell® .

The thermoplastic pipe joining method and modular components of the present invention may be employed to prepare a whole piping system to be used for a number of different purposes. For example, the piping system may be one which is used to carry water to a site for irrigation, or it may be one used to carry sewage or industrial waste from a site. The piping system may be one which is used to transport any one of a large number of raw materials or chemicals utilized in various manufacturing processes. However, a preferred use for a piping system prepared by the method of the present invention is as a submersible underdrain system installed in an activated carbon adsorber for the purpose of dispensing and/or collecting industrial wastewater or other liquid material to be treated by the activated carbon in the adsorber. The adsorber unit itself is essentially a very large tank to which there is added virgin or regenerated activated carbon, and from which the activated carbon is removed once it has become loaded with adsorbed impurities. The adsorber unit also is provided with various plumbing which serves to bring a liquid stream to be treated into contact with the activated carbon, and then to remove the stream which has been treated. Typically, the underdrain system lies at the bottom of the adsorber tank and consists of an adsorber inlet nozzle which communicates directly to a piping loup, usually with several branches. The purpose of this piping is to remove the liquid stream accumulating in the bottom of the adsorber tank after having been treated by the activated carbon lying above.  The treated liquid enters the underdrain piping through a number of special nozzles located in the underdrain piping.  The underdrain piping system employed in any particular adsorber will be designed in accordance with numerous factors such as tank size, flow rate, backwash requirements, viscosity of the liquid stream, and so forth.  Thus, a large number of different underdrain piping systems are required.  The thermoplastic pipe joining method and modular components of the present invention permit the assembly of any one of these many underdrain piping systems quickly and easily, relying on a small number of modular components available from inventory, and preparation of straight pieces where assembly of the underdrain piping system is taking place.

Where it is desired to assemble a piping system able to withstand relatively high internal pressures, the modular components of the present invention may be modified in the following way: the outer circumference of the coupling ring may be grooved so as to accommodate an o-ring, and then an o-ring made of a suitable elastomeric material may be inserted in the groove.  When the locking cap is secured about the coupling ring, the o- ring will produce a secure seal between the locking cap and coupling ring.

The thermoplastic pipe joining method and modular components of the present invention will be better understood from the following description of certain preferred embodiments illustrated in the accompanying drawing wherein:

FIG.  1 is a top view of a typical underdrain piping system;

FIG. 2 is a schematic view of a conventional 1/4 Bend and a conventional Tee pipe piece modified with sleeves and having coupling rings bonded thereto;

FIG. 3 is an end view of a coupling ring, showing the face which is to be flush with a pipe piece opening;

FIG. 4 is a side view of a coupling ring bonded to a straight pipe piece;

FIG. 5 is a partly sectional view of the two equal halves of a locking cap showing these secured together with bolts;

FIG. 6 is a schematic view of the top end of the top half and bottom end of the bottom half of a locking cap;

FIG. 7 is a sectional view of a portion of a locking cap;

FIG. 8 is a side view of two pipe pieces joined by means of coupling rings and a locking cap in accordance with the method of the present invention;

FIG.9 is a partly sectional view of three conventional pipe pieces joined by means of coupling rings and locking caps; and

FIG. 10 is an exploded perspective view of a straight pipe piece, welding sleeve and coupling ring, which are fused together to form a modular component of the present invention.

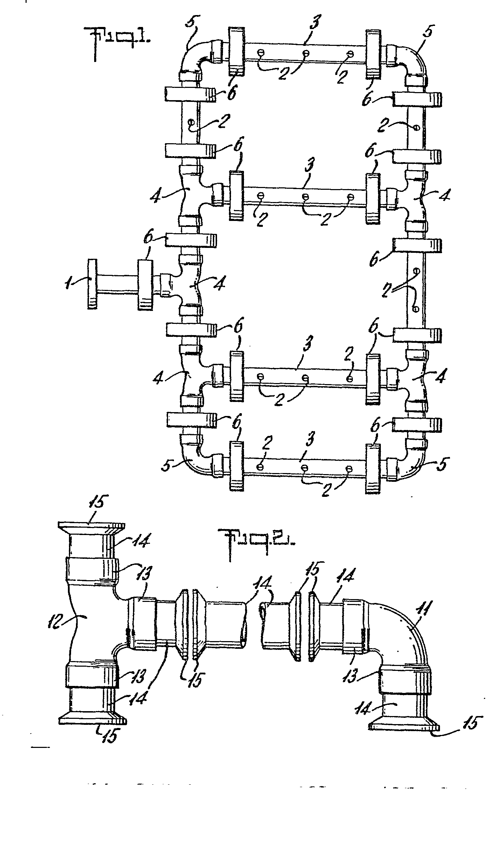

Referring to the drawing, wherein like reference numerals in all figures refer to like parts, the typical underdrain piping system illustrated in FIG. 1 comprises an adsorber inlet nozzle 1, and a number of drain nozzles 2 located in the various parts of the system, the straight pieces 3, Tees 4, and 1/4 Bends 5. All of these pieces are joined using the coupling rings and locking caps of the present invention, shown together as 6 in the Figure.

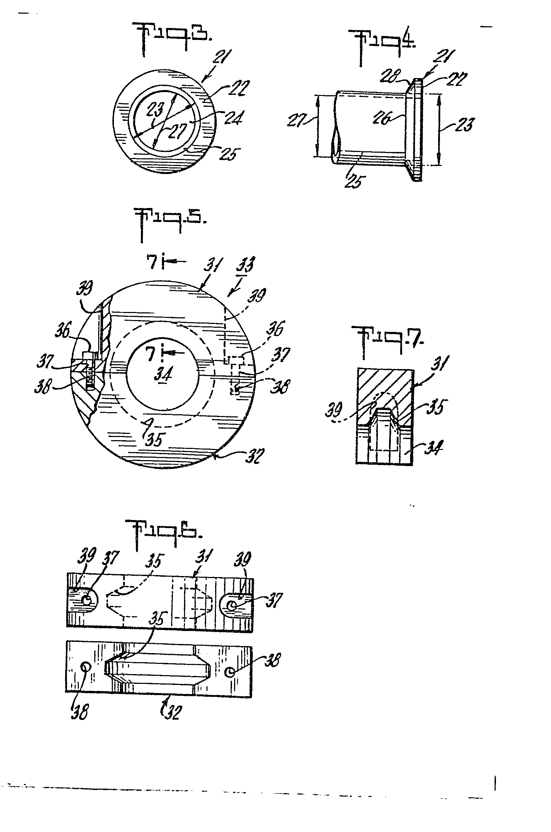

FIG. 2 illustrates the manner in which conventional pipe pieces, in this particular case a 1/4 Bend 11 and a Tee 12, which are typically provided with sockets or collars 13, are adapted for use in the present invention by having a sleeve 14 joined to the socket or collar end of the piece. In turn, a coupling ring 15 is bonded to the end of each sleeve 14.

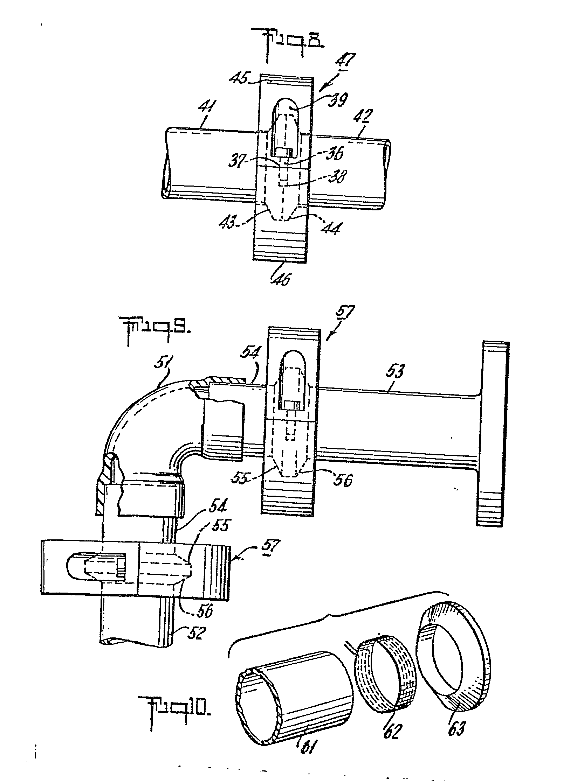

FIG. 3 is an end or front view of the coupling ring 21 of the present invention, showing the face 22 which is to be flush with a pipe piece opening. The diameter 23 of the coupling ring opening or aperture 24 is the same as the outside diameter of a straight pipe piece, or the sleeve 14 in FIG. 2, for example. In a preferred embodiment, illustrated in FIG. 10, the diameter 23 of the coupling ring 21 would be large enough to also accommodate a welding sleeve.

FIG. 4 is a side view of the coupling ring 21 bonded to the end of a straight pipe piece 25. This view also shows the face 26 opposite to the face 22 which is flush with the pipe piece opening 27. The face 26 has a tapered cross-section 28.

FIG. 5 is a partly sectional view of the two equal halves 31 and 32 of the locking cap 33 of the present invention. The aperture or opening 34 has a diameter at least as great as the outside diameter of any two pipe pieces which are being joined. Opening onto this aperture or opening 34 is a groove 35, which runs through the entire circumference of the aperture or opening 34. The two equal halves 31 and 32 are secured together with two bolts 36 which pass through holes 37 on either side of the half 31, and are received and threadingly engaged by adjacent holes 38 in the other half 32. The half 31 also has a cutaway portion 39 which permits access to the bolts 36 for tightening.

FIG. 6 is a schematic view of the top end of the top half 31 and bottom end of bottom half 32 of the locking cap shown in FIG. 5. The top end is the rounded end and the bottom end is the end where the two halves are joined together. The cutaway portions 39 with holes 37 are shown in top half 31, and the holes 38 are shown in bottom half 32, and the groove 35 is depicted for both halves.

FIG. 7 is a sectional view of one half of locking cap 33 shown in FIG. 5, taken along the line 7-7, illustrating the groove 35, and particularly its tapered configuration corresponding to the tapered cross-section of the coupling rings.

FIG. 8 is a s i d e view of two straight pipe pieces 41 and 42 joined by means of the coupling rings 43 and 44 bonded to the ends thereof, together with the two halves 45 and 46 of the locking cap 47. The cutaway portions 39 in the half 45, and the securing bolts 36, are also shown.

Fig. 9 is a partly sectional view of three pipe pieces, a 1/4 Bend 51 and two straight pieces 52 and 53, with adapter sleeves 54 on the 1/4 Bend 51, joined by means of coupling rings 55 bonded to the ends of sleeves 54 and the coupling rings 56 bonded to the ends of the straight pieces 52 and 53.
The locking caps are shown in outline as 57. This particular assembly of pieces is used typically as the adsorber inlet nozzle to the underdrain piping system.

FIG. 10 is an exploded perspective view of a straight pipe piece 61, a welding sleeve 62 which fits tightly over the end of pipe 61, and a coupling ring 63 of the present invention, which fits tightly in turn over the welding sleeve 62 and the end of pipe 61. When an electrical current is passed through welding sleeve 62, the electrical resistance heating produces fusion bonding of the thermoplastic synthetic resin of the pipe 61 and coupling ring 63 adjacent the welding sleeve 62, and of the welding sleeve 62 itself, whereby the three pieces are fused together to form a strong, monolithic bond.

WHAT IS CLAIMED IS:

1. A thermoplastic pipe joining method comprising the steps of:

(a) providing each of two thermoplastic pipe pieces to be joined with a thermoplastic coupling ring comprising a flange having one face flush with the openings of said pipe pieces, and the opposite face having a tapered cross-section;

(b) bringing into contact the coupling rings of the two pipe pieces to be joined together, with the faces of the coupling rings which are flush with said openings of said pipe pieces being in contact so that said openings are contiguous and form a continuous conduit;

(c) placing around said coupling rings in contact with each other a thermoplastic, ring-shaped locking cap comprising two equal halves, with an aperture through the center thereof, the diameter of which is at least as great as the outside diameter of the two pipe pieces being joined, and opening onto said aperture a groove running through the entire circumference of said aperture, and being of a size and shape to accommodate the two coupling rings in contact with each other, said ring-shaped locking cap also being provided with means for securing said two equal halves thereof together; and

(d) securing said two equal halves of said ring-shaped locking cap together, whereby said two pipe pieces are joined together.

2. The method of Claim 1 wherein said pipe pieces to be joined have said coupling rings formed as an integral part thereof during their manufacture.

3.    A thermoplastic pipe joining method for use with conventional thermoplastic pipe pieces having sockets on at least one of their open ends, comprising the steps of:

(a)   joining a thermoplastic sleeve portion to the socket ends of said conventional pipe pieces;

(b)   bonding to the end of said sleeve portions and to the ends of thermoplastic straight pipe pieces, a thermoplastic coupling ring comprising a flange having one face flush with the openings of said sleeve portions and said straight pipe pieces, and the opposite face having a tapered cross-section;

(c)   bringing into contact the coupling rings of two pipe pieces to be joined together, with the faces of the coupling rings which are flush with the openings of said sleeve portions and said straight pipe pieces being in contact so that said openings are contiguous and form a continuous conduit;

(d)   placing around said coupling rings in contact with each other a thermoplastic, ring-shaped locking cap comprising two equal halves, with an aperture through the center thereof, the diameter of which is at least as great as the outside diameter of the two pipe pieces being joined, and opening onto said aperture a groove running through the entire circumference of said aperture, and being of a size and shape to accommodate the two coupling rings in contact with each other, said ring-shaped locking cap also being provided with means for securing said two equal halves thereof together; and

(e)   securing said two equal halves of said ring-shaped locking cap together, whereby said two thermoplastic pipe pieces are joined together.

4. A method of assembling a thermoplastic underdrain piping system installed in an activated carbon adsorber, wherein the various thermoplastic pipe pieces of which said underdrain piping system is comprised, are each and all joined by the steps of:

(a) providing each of two thermoplastic pipe pieces to be joined with a thermoplastic coupling ring comprising a flange having one face flush with the openings of said pipe pieces, and the opposite face having a tapered cross-section;

(b) bringing into contact the coupling rings of the two pipe pieces to be joined together, with the faces of the coupling rings which are flush with said openings of said pipe pieces being in contact so that said openings are contiguous and form a continuous conduit;

(c) placing around said coupling rings in contact with each other a thermoplastic, ring-shaped locking cap comprising two equal halves, with an aperture through the center thereof, the diameter of which is at least as great as the outside diameter of the two pipe pieces being joined, and opening onto said aperture a groove running through the entire circumference of said aperture, and being of a size and shape to accommodate the two coupling rings in contact with each other, said ring-shaped locking cap also being provided with means for securing said two equal halves thereof together; and

(d) securing said two equal halves of said ring-shaped locking cap together, whereby said two pipe pieces are joined together.

5. A pipe piece for use in thermoplastic pipe joining methods comprising a conventional thermoplastic pipe piece having a socket on at least one of its open ends, and a thermoplastic sleeve portion joined to said socket end, said sleeve being provided with a thermoplastic coupling ring comprising a flange having one face flush with the opening end of said sleeve, and the opposite face having a tapered cross-section.

6. Modular components for use in thermoplastic pipe joining methods comprising (a) two thermoplastic pipe pieces, each having on at least one open end thereof a thermoplstic coupling ring comprising a flange having one face flush with said open end, and the opposite face having a tapered cross-section; and (b) a thermoplastic, ring-shaped locking cap comprising two equal halves, with an aperture through the center thereof, the diameter of which is at least as great as the outside diameter of the two pipe pieces ·to be joined, and opening onto said aperture a groove running through the entire circumference of said aperture, and being of a size and shape to accommodate the two coupling rings, said ring-shaped locking cap also being provided with means for securing said two equal halves thereof together.

7. Modular components for use in thermoplastic pipe joining methods comprising (a) two conventional thermoplastic pipe pieces having sockets on at least one of their open ends, and a thermoplstic sleeve portion joined to said socket ends, each of said sleeve portions being provided with a thermoplastic coupling ring comprising a flange having one face flush with the open end of said sleeve, and the opposite face having a tapered cross-section and (b) a thermoplastic, ring-shaped locking cap comprising two equal halves, with an aperture through the center thereof, the diameter of which is at least as great as the outside diameter of the two pipe pieces to be joined, and opening onto said aperture a groove running through the entire circumference of said aperture, and being of a size and shape to accommodate the two coupling rings, said ring-shaped locking cap also being provided with means for securing said two equal halves thereof together.

0011558

Fig.1.

Fig.2.

0011558

Fig.3.

Fig.4.

Fig.5.

Fig.7.

Fig.6.

Fig.8

Fig.9.

Fig.10.

| | EUROPEAN SEARCH REPORT | Application number |
| --- | --- | --- |
| European Patent Office | | EP 79 40 0846 |

| DOCUMENTS CONSIDERED TO BE RELEVANT | | | CLASSIFICATION OF THE APPLICATION (Int. Cl. 3) |
| --- | --- | --- | --- |
| Category | Citation of document with indication, where appropriate, of relevant passages | Relevant to claim | F 16 L 47/00 <br> E 03 F 3/04 |
| X | GB - A - 29 358 AD 1909 (CHURCH-WARD) <br> * Figures * <br><br> -- | 1,4,6 | |
| X | GB - A - 940 009 (A.O. SMITH CORP.) <br> * Page 1, lines 27-38; page 2, lines 26-48; figures * <br><br> -- | 1,2,4, 6 | |
| | FR - A - 1 154 351 (FARBWERKE HOECHST A.G.) <br> * Page 1, right-hand column, line 36 to page 2, left-hand column, line 34; figure 1 * <br><br> -- | 1,2 | TECHNICAL FIELDS SEARCHED (Int.Cl. 3) <br><br> F 16 L <br> E 03 F <br> E 03 C |
| | FR - A - 2 206 827 (PONT-A-MOUSSON S.A.) <br> * Page 1, line 38 to page 2, line 17; figures * <br><br> -- | 1,4,6, | |
| | FR - A - 1 217 013 (MENDIP) <br> * Page 3, right-hand column, lines 30-52; figures 5,6 * <br><br> -- | 1,2,4, 6 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | FR - A - 2 354 504 (PONT-A-MOUSSON S.A.) <br> * Page 2, lines 1-8; figure 1 * <br><br> -- | 1,4,6 | |
| PE | FR - A - 2 399 604 (DURAPIPE LTD.) (published 02-03-1979) <br> * Figure 2 * | 1,4,6 | |
| | The present search report has been drawn up for all claims | | &: member of the same patent family, corresponding document |
| Place of search <br> The Hague | Date of completion of the search <br> 20-02-1980. | Examiner <br> HUBEAU | |

EPO Form 1503.1  06.78